# DEMANDE DE BREVET EUROPEEN

(11) **EP 4 016 053 A1**
(43) Date de publication de la demande: **22.06.2022**
(21) Numéro de dépôt: 21215670.7
(22) Date de dépôt: 17.12.2021
(51) Int. Cl.: G01N 21/45, G01N 21/77

(54) **COMPOSANT OPTIQUE POUR UN DISPOSITIF D'IMAGERIE INTERFÉROMÉTRIQUE**

(30) Priorité: 21.12.2020 FR 2013816
(71) Demandeur: Commissariat à l'énergie atomique et aux énergies alternatives, 75015 Paris (FR)
(72) Inventeur: MONPEURT, Cyrielle, 38054 GRENOBLE CEDEX 09 (FR); BEURRIER-BOUSQUET, Marine, 38054 GRENOBLE CEDEX 09 (FR); DUPOY, Mathieu, 38054 GRENOBLE CEDEX 09 (FR); JOBERT, Gabriel, 38054 GRENOBLE CEDEX 09 (FR)
(74) Mandataire: Brevalex

(57) **Abrégé**

Composant optique (100) pour un dispositif d'imagerie interférométrique, qui comprend :
- un bras objet, comportant un premier guide d'onde planaire (120A) et un premier réseau de diffraction formé dans le premier guide d'onde planaire et apte à extraire de la lumière hors du bras objet ;
- un bras de référence, comportant un second guide d'onde planaire (120B) et un second réseau de diffraction formé dans le second guide d'onde planaire et apte à extraire de la lumière hors du bras de référence ;
où le composant optique (100) est configuré pour que, en utilisation avec une surface (21) optiquement réfléchissante s'étendant parallèle au plan du composant optique entre le bras objet et le bras de référence, une partie au moins de la lumière (202A) extraite hors du bras objet interfère avec une partie au moins de la lumière (202B) extraite hors du bras de référence.

## Description

### DOMAINE TECHNIQUE

L'invention se rapporte au domaine de l'imagerie d'un échantillon, notamment l'imagerie infrarouge.

### ETAT DE LA TECHNIQUE ANTERIEURE

On connaît dans l'art antérieur des techniques d'imagerie infrarouge, basées sur des mesures de valeurs locales d'absorption dans un échantillon. Dans certains cas, cependant, l'échantillon à analyser comporte à la fois des composés hautement absorbants et des composés faiblement absorbants sur une même plage de longueurs d'onde. L'absorption par les composés hautement absorbants recouvre alors une absorption par des composés plus faiblement absorbants. Cette situation se présente par exemple lorsque l'échantillon comporte une grande quantité de molécules d'eau et une faible quantité de molécules tierces, dont l'absorption est négligeable relativement à l'absorption par les molécules d'eau. Dans une telle situation, une image basée directement sur des mesures d'absorption n'est pas adaptée.

Pour éviter cet inconvénient, on peut former une image, non pas directement sur la base de mesures d'absorption, mais plutôt sur la base de mesures de phase (imagerie interférométrique). L'image réalisée est alors une répartition de valeurs locales d'un déphasage apporté par l'échantillon. L'imagerie basée sur des mesures de phase peut être mise en œuvre à l'aide d'un interféromètre de Mach-Zehnder, dans lequel l'un des bras traverse un échantillon à analyser, et en utilisant un capteur est de type matriciel. Cette solution est cependant limitée à des mesures en transmission, impliquant de fortes limitations sur l'échantillon, notamment en termes d'épaisseur. En outre, les différents éléments constituant l'interféromètre sont susceptibles de se déplacer les uns relativement aux autres, ce qui conduit à un dispositif peu robuste.

Un objectif de la présente invention est de proposer une solution pour réaliser de l'imagerie interférométrique, à l'aide d'un dispositif qui soit robuste et qui n'impose pas que l'échantillon présente une épaisseur réduite.

Un but de la présente invention est notamment de proposer un composant optique pour un dispositif d'imagerie interférométrique, où ledit dispositif et robuste et n'impose pas que l'échantillon présente une épaisseur réduite.

### PRESENTATION DE L'INVENTION

Cet objectif est atteint avec un composant optique pour un dispositif d'imagerie interférométrique, qui comprend :
- un bras objet, comportant un premier guide d'onde planaire s'étendant parallèle à un plan nommé plan du composant optique, et un premier réseau de diffraction formé dans le premier guide d'onde planaire et apte à extraire de la lumière hors dudit premier guide d'onde planaire et hors du bras objet ;
- un bras de référence, comportant un second guide d'onde planaire s'étendant parallèle au plan du composant optique, et un second réseau de diffraction formé dans le second guide d'onde planaire et apte à extraire de la lumière hors dudit second guide d'onde planaire et hors du bras de référence.

Le composant optique est configuré pour que, en utilisation avec une surface optiquement réfléchissante s'étendant parallèle au plan du composant optique entre le bras objet et le bras de référence, une partie au moins de la lumière extraite hors du bras objet interfère avec une partie au moins de la lumière extraite hors du bras de référence.

Le composant optique selon l'invention est destiné à faire partie d'un dispositif d'imagerie, exploitant des déphasages locaux apportés par l'échantillon à analyser.

De préférence, mais de manière non limitative, le composant optique selon l'invention est destiné à faire partie d'un dispositif d'imagerie dans l'infrarouge. Dit autrement, les premier et second guides d'onde planaires sont chacun aptes à guider de la lumière infrarouge, et les premier et second réseaux de diffraction sont chacun aptes à extraire de la lumière infrarouge hors du guide d'onde planaire correspondant. La lumière infrarouge peut inclure la longueur d'onde centrale d'au moins un pic d'absorption d'un composant chimique ou biologique, dont on recherche la présence dans un échantillon à analyser. Avantageusement, le composant optique selon l'invention est configuré pour traiter de la lumière à des longueurs d'onde utilisées en spectroscopie infrarouge, c'est-à-dire de la lumière appartenant au spectre infrarouge, notamment le moyen infrarouge. En variante, le composant optique selon l'invention est destiné à faire partie d'un dispositif d'imagerie dans le visible. L'invention n'est cependant pas limitée à une gamme de longueurs d'onde en particulier. Dans tout le texte, le terme « infrarouge » se rapporte à une partie du spectre lumineux appartenant à une bande spectrale allant de 0,78 µm à 50 µm, plus préférentiellement de 2 µm à 14 µm (infrarouge moyen). Dans tout le texte, le terme « visible » se rapporte à une partie du spectre lumineux appartenant à une bande spectrale allant de 0,35 µm à 0,78 µm exclu.

Un pic d'absorption induit un saut d'indice, et donc un saut de phase. Une idée à la base de l'invention consiste donc à réaliser une image d'un échantillon, non pas sur la base de mesures d'absorption, mais sur de mesures de phase.

Le composé optique selon l'invention comporte un bras objet et un bras de référence. En utilisation avec une surface optiquement réfléchissante telle que mentionnée ci-dessus, une partie au moins de la lumière extraite hors du bras objet interfère avec une partie au moins de la lumière extraite hors du bras de référence. En remplaçant une partie au moins de ladite surface optiquement réfléchissante par une surface d'un échantillon à analyser, on peut faire interférer ensemble un faisceau lumineux ayant interagi avec l'échantillon à analyser et un faisceau lumineux n'ayant pas interagi avec l'échantillon à analyser. Le composé optique selon l'invention forme ainsi un dispositif d'imagerie interférométrique, pour fournir une figure d'interférence formée par faisceau lumineux ayant interagi avec l'échantillon à analyser et un faisceau lumineux n'ayant pas interagi avec l'échantillon à analyser. A partir de cette figure d'interférence, on peut retrouver une répartition de valeurs de déphasages apportés par l'échantillon à analyser, c'est-à-dire une image interférométrique de l'échantillon à analyser. L'invention offre ainsi une solution d'imagerie interférométrique, pour réaliser une image de phase d'un échantillon. Puisque l'image est formée par des mesures de phase, il n'est pas gênant qu'un même échantillon comporte à la fois des composés hautement absorbants tels que l'eau, et des composés faiblement absorbants sur une même plage de longueurs d'onde. Cette image peut être utilisée pour déterminer une répartition de compositions chimiques ou biologiques locales sur l'échantillon à analyser, en exploitant le fait que chaque composé chimique ou biologique absorbe (et déphase) certaines fréquences d'un rayonnement incident, avec une signature propre permettant une identification (identification par spectroscopie, notamment spectroscopie infrarouge). On peut ainsi déterminer la composition chimique ou biologique d'un échantillon, même en présence de composés hautement absorbants susceptibles de recouvrir la signature d'autres composés plus faiblement absorbants dans la même gamme de longueurs d'onde.

Le composant optique selon l'invention est prévu pour une utilisation dans laquelle la lumière arrivant sur l'échantillon à analyser est renvoyée par ce dernier. Par conséquent, le composant optique selon l'invention n'impose pas que l'échantillon à analyser présente une épaisseur réduite. L'échantillon peut par exemple avoir une épaisseur allant jusqu'à environ 100 µm. La lumière renvoyée par l'échantillon à analyser peut être renvoyée par réflexion spéculaire sur ledit échantillon, ou par réflexion diffuse (rétrodiffusion) sur ledit échantillon. En variante, l'échantillon à analyser est posé sur une lame réfléchissante, et la lumière est renvoyée par réflexion spéculaire sur ladite lame réfléchissante, après avoir traversé l'échantillon à analyser. Dans ce cas, la lumière traverse donc deux fois l'échantillon à analyser.

Le composant optique selon l'invention est basé sur des guides d'onde planaires munis chacun de réseaux de diffraction pour l'extraction de la lumière. Il peut ainsi présenter une grande robustesse. En particulier, il peut ainsi former un composant optique intégré sur un substrat, notamment un composant optique intégré sur un substrat en silicium.

Le composant optique selon l'invention permet d'acquérir des figures d'interférences rapportant à une surface entière d'un échantillon à analyser. Il forme donc un dispositif d'imagerie interférométrique grand champ. Il permet de réaliser des mesures de phase se rapportant simultanément à une surface entière d'un échantillon à analyser, sans nécessité de déplacer le composant optique relativement audit échantillon.

La surface optiquement réfléchissante mentionnée ci-dessus s'étend de préférence dans un plan passant par une face d'extrémité du composant optique selon l'invention, formant surface d'appui. En utilisation, l'échantillon est plaqué contre cette surface d'appui, ce qui permet une grande maîtrise d'une distance entre l'échantillon à analyser et le composant optique selon l'invention, et le cas échéant une grande maîtrise d'une distance entre l'échantillon à analyser et un détecteur matriciel agencé solidaire du composant optique.

Selon l'invention, le premier guide d'onde planaire et le second guide d'onde planaire ne sont pas superposés l'un au-dessus de l'autre selon un axe orthogonal au plan du composant optique. De préférence, le premier guide d'onde planaire et le second guide d'onde planaire sont formés coplanaires.

L'invention présente certains points communs avec l'objet décrit dans la demande de brevet WO 2018/015517. Néanmoins, cet objet vise plutôt à obtenir une image holographique d'un échantillon, et non une image de déphasages apportés localement par l'absorption dans l'échantillon. Cet objet utilise donc une illumination dans des longueurs d'onde non absorbées par l'échantillon, de préférence dans le visible. En outre, cet objet est structurellement assez différent de l'invention. En particulier, il ne comporte qu'un seul guide d'onde.

Selon un mode de réalisation avantageux :
- le bras objet est configuré pour qu'une partie au moins de la lumière extraite par le premier réseau de diffraction émerge du bras objet en étant orientée selon un premier axe de sortie ; et
- le bras de référence est configuré pour qu'une partie au moins de la lumière extraite par le second réseau de diffraction émerge du bras de référence en étant orientée selon un second axe de sortie ;
où le second axe de sortie est incliné d'un angle inférieur ou égal à 5°, relativement au symétrique du premier axe de sortie selon une symétrie planaire par un plan de symétrie orthogonal au plan du composant optique.

Selon un mode de réalisation avantageux :
- le bras objet comporte en outre un premier substrat d'appui, superposé au premier guide d'onde planaire le long d'un axe orthogonal au plan du composant optique ; et
- le bras de référence comporte en outre un second substrat d'appui, superposé au second guide d'onde planaire le long d'un axe orthogonal au plan du composant optique ;
   et :
   - le bras objet est configuré pour qu'une partie au moins de la lumière extraite par le premier réseau de diffraction émerge du bras objet au niveau d'une première face de sortie, appartenant au premier substrat d'appui et orientée transverse relativement au plan du composant optique ; et
   - le bras de référence est configuré pour qu'une partie au moins de la lumière extraite par le second réseau de diffraction émerge du bras de référence au niveau d'une seconde face de sortie, appartenant au second substrat d'appui et orientée transverse relativement au plan du composant optique.

De manière avantageuse :
- dans le bras objet, le premier réseau de diffraction présente une première valeur du pas de répartition des motifs, adaptée pour extraire un faisceau lumineux à une longueur d'onde d'extraction, et selon une première direction d'extraction telle que la lumière pénètre dans le premier substrat d'appui puis émerge de ce dernier au niveau de la première face de sortie ;
- dans le bras de référence, le second réseau de diffraction présente une seconde valeur du pas de répartition des motifs, adaptée pour extraire un faisceau lumineux à ladite longueur d'onde d'extraction, et selon une seconde direction d'extraction telle que la lumière pénètre dans le second substrat d'appui puis émerge de ce dernier au niveau de la seconde face de sortie.

De manière avantageuse :
- dans le bras objet, la première direction d'extraction est adaptée pour qu'un faisceau lumineux associé arrive à incidence normale sur la première face de sortie ; et
- dans le bras de référence, la seconde direction d'extraction est adaptée pour qu'un faisceau lumineux associé arrive à incidence normale sur la seconde face de sortie.

De manière avantageuse, chacun parmi le premier réseau de diffraction et le second réseau de diffraction :
- est constitué de motifs qui comportent chacun une portion bas indice, en un matériau bas indice, et une portion haut indice, en un matériau haut indice, avec l'indice de réfraction du matériau haut indice strictement supérieur à l'indice de réfraction du matériau bas indice ; et
- présente une valeur locale du facteur de remplissage qui varie de façon monotone au fur et à mesure que l'on s'approche de la première, respectivement seconde face de sortie, la valeur locale du facteur de remplissage se rapprochant ainsi progressivement de la valeur 0,5, et avec le facteur de remplissage qui désigne un rapport entre une surface occupée par la portion bas indice dans un motif dudit réseau de diffraction et une surface totale occupée par ledit motif, lesdites surfaces étant définies dans un plan de coupe parallèle au plan du composant optique.

Le composant optique selon l'invention peut comporter en outre un diviseur à une entrée et deux sorties, configuré pour recevoir en entrée un faisceau lumineux initial et pour répartir celui-ci vers le bras objet et le bras de référence, et le composant optique peut comporter en outre :
- un premier guide d'adaptation, s'étendant entre l'une première sortie du diviseur et le premier guide d'onde planaire du bras objet, et présentant une largeur croissante depuis une extrémité accolée à la première sortie du diviseur jusqu'à une extrémité accolée au premier guide d'onde planaire ; et
- un second guide d'adaptation, s'étendant entre l'une seconde sortie du diviseur et le second guide d'onde planaire du bras de référence, et présentant une largeur croissante depuis une extrémité accolée à la seconde sortie du diviseur jusqu'à une extrémité accolée au second guide d'onde planaire.

De préférence, le premier guide d'adaptation et le second guide d'adaptation sont chacun recourbés, de manière à ce qu'un axe de propagation de la lumière en entrée du premier guide d'onde planaire et un axe de propagation de la lumière en entrée du second guide d'onde planaire soient parallèles entre eux et de sens opposés.

Le composant optique selon l'invention peut présenter une symétrie planaire, relativement à un plan de symétrie orthogonal au plan du composant optique et passant entre le bras objet et le bras de référence.

En variante :
- le bras objet est configuré pour qu'une partie au moins de la lumière extraite par le premier réseau de diffraction émerge du bras objet en étant orientée selon un premier axe de sortie ;
- le bras de référence est configuré pour qu'une partie au moins de la lumière extraite par le second réseau de diffraction émerge du bras de référence en étant orientée selon un second axe de sortie ; et
- le bras objet et le bras de référence sont quasiment symétriques l'un de l'autre, selon une symétrie planaire par un plan de symétrie orthogonal au plan du composant optique, et avec une asymétrie définie par un écart angulaire compris entre 0,5° et 5° entre le second axe de sortie et le symétrique du premier axe de sortie par ladite symétrie planaire.

De manière avantageuse :
- le bras objet comporte en outre un premier substrat inférieur, avec le premier guide d'onde planaire intercalé entre le premier substrat d'appui et le premier substrat inférieur ;
- le bras de référence comporte en outre un second substrat inférieur, avec le second guide d'onde planaire intercalé entre le second substrat d'appui et le second substrat inférieur ;

où le bras objet est configuré pour que la lumière extraite par le premier réseau de diffraction émerge du bras objet par le premier substrat d'appui et par le premier substrat inférieur ; et
où le bras de référence est configuré pour que la lumière extraite par le second réseau de diffraction émerge du bras de référence par le second substrat d'appui et par le second substrat inférieur.

L'invention concerne également un système optique qui comporte un composant optique selon l'invention, et un détecteur matriciel situé entre le bras objet et le bras de référence et configuré pour acquérir une figure d'interférence formée par une partie au moins de la lumière extraite hors du bras objet et une partie au moins de la lumière extraite hors du bras de référence.

De préférence, le détecteur matriciel s'étend dans une région d'intersection entre un faisceau lumineux extrait hors du bras objet et réfléchi sur une première zone de la surface optiquement réfléchissante, et un faisceau lumineux extrait hors du bras de référence et réfléchi sur une seconde zone de la surface optiquement réfléchissante.

En variante :
- le bras objet est configuré pour extraire de la lumière selon deux directions distinctes ;
- le bras de référence est configuré pour extraire de la lumière selon deux directions distinctes ; et
- le détecteur matriciel s'étend dans une première région d'intersection et dans une seconde région d'intersection ;

où la première région d'intersection est une région dans laquelle un faisceau lumineux extrait hors du bras objet et réfléchi sur une première zone de la surface optiquement réfléchissante, interfère avec un faisceau lumineux extrait hors du bras de référence et arrivant directement sur ladite première région d'intersection ; et
où la seconde région d'intersection est une région dans laquelle un faisceau lumineux extrait hors du bras de référence et réfléchi sur une seconde zone de la surface optiquement réfléchissante, interfère avec un faisceau lumineux extrait hors du bras objet et arrivant directement sur ladite seconde région d'intersection.

### BREVE DESCRIPTION DES FIGURES

La présente invention sera mieux comprise à la lecture de la description d'exemples de réalisation donnés à titre purement indicatif et nullement limitatif, en faisant référence aux dessins annexés sur lesquels :
- les figures 1A et 1B illustrent de manière schématique, selon deux vues en coupe respectives, un premier mode de réalisation d'un composant optique selon l'invention ;
- la figure 2 illustre de manière schématique le composant optique des figures 1A et 1B, en utilisation ;
- la figure 3 illustre de manière schématique un agencement avantageux des directions d'extraction et des faces de sortie dans le composant optique des figures 1A et 1B ;
- la figure 4 illustre de manière schématique un deuxième mode de réalisation d'un composant optique selon l'invention ;
- les figures 5A et 5B illustrent de manière schématique, selon deux vues en coupe respectives, un premier mode de réalisation d'un système selon l'invention ;
- la figure 6A illustre de manière schématique un troisième mode de réalisation d'un composant optique selon l'invention ;
- la figure 6B illustre de manière schématique le composant optique de la figure 6A, en utilisation ; et
- la figure 7 illustre de manière schématique un quatrième mode de réalisation d'un composant optique selon l'invention.

### DESCRIPTION DES MODES DE REALISATION

Pour faciliter la lecture, on a représenté sur les figures les axes d'un repère orthonormé (Oxyz). L'axe (Oz) désigne un axe vertical. Les axes (Ox) et (Oy) définissent ensemble un plan horizontal.

Dans la description qui suit, lorsque l'on fait référence à des qualificatifs de position absolue, tels que les termes "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à des positions ou orientations dans les vues en coupe dans un plan (Oyz).

Dans tout le texte, un guide d'onde planaire désigne un élément de guidage optique, apte à guider la propagation de la lumière par réflexions successives sur des faces planes parallèles entre elles (ici, il s'agit plus particulièrement d'un guidage réfractif). Dans un guide d'onde planaire, la lumière est confinée selon l'un des axes de l'espace à trois dimensions, et libre de se propager selon les deux autres axes. Un guide d'onde est constitué d'un cœur, dans lequel circule la lumière, et d'une gaine, assurant une différence d'indice optique souhaitée entre le cœur et un milieu entourant le cœur. Dans le cas d'un guide d'onde planaire, une couche de cœur est intercalée entre deux couches de gaine, et la lumière est guidée dans la couche de cœur par réflexions successives aux interfaces entre la couche de cœur et chacune respective des couches de gaine.

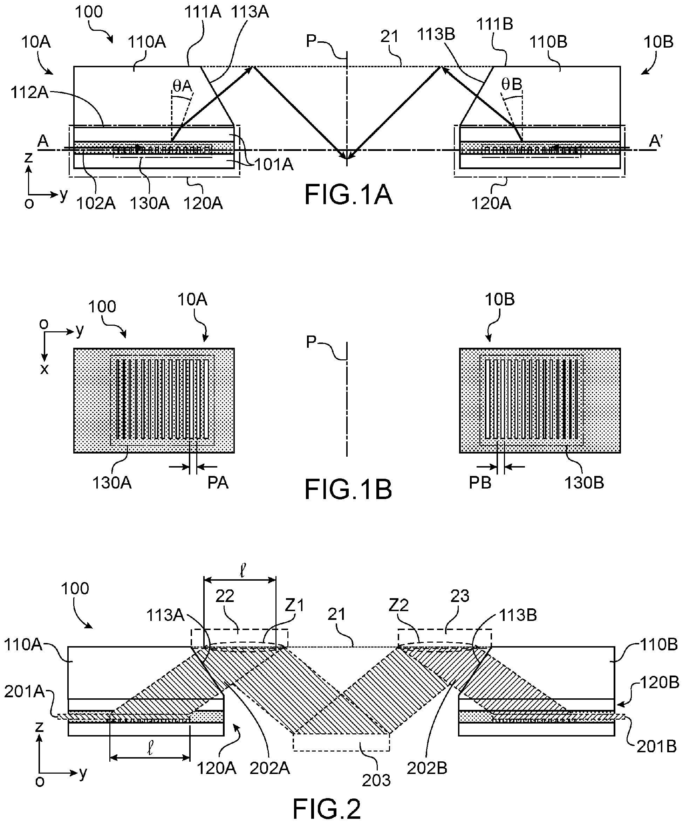

On décrit tout d'abord, en référence aux figures 1A et 1B, un premier mode de réalisation d'un composant optique 100 selon l'invention. La figure 1A illustre le composant optique 100, dans une vue en coupe selon un plan parallèle au plan (Oyz). La figure 1B illustre le composant optique 100 dans une vue en coupe selon un plan AA' parallèle au plan (Oxy).

Le composant optique 100 comporte un bras objet 10A et un bras de référence 10B.

Ici, le bras objet 10A comporte un premier substrat d'appui 110A et un premier guide d'onde planaire 120A.

Le premier substrat d'appui 110A est constitué ici de silicium. Il est délimité notamment par deux faces planes 111A, 112A qui s'étendent parallèle au plan (Oxy), ainsi que par une face transverse 113A, nommée première face de sortie, orientée en biais relativement au plan (Oxy) et reliant les deux faces planes 111A et 112A.

Le premier guide d'onde planaire 120A est constitué d'une couche de cœur intercalée entre deux couches de gaine. Il est formé dans un empilement constitué d'une couche fort indice 102A intercalée entre deux couches bas indice 101A. La couche de cœur du premier guide d'onde planaire 120A est constituée par la couche fort indice 102A. Les couches de gaine du premier guide d'onde planaire 120A sont formées chacune dans l'une respective des couches bas indice 101A. Ainsi, chaque couche de gaine est constituée par tout ou partie de l'une respective des couches bas indice 101A.

Ici, les couches bas indice sont en alliage germanium-silicium (avec de préférence 40% de germanium) et la couche fort indice est en germanium. En variante, la couche fort indice et les couches bas indice sont toutes en alliage de silicium et de germanium, avec une plus forte teneur en germanium dans la couche fort indice. Ici, les couches fort indice et bas indice présentent chacune une composition chimique homogène, avec un indice de réfraction de la couche fort indice strictement supérieur à un indice de réfraction des couches bas indice (ici aux longueurs d'onde infrarouge, par exemple à 8 µm). En variante, la couche fort indice et/ou les couches bas indice peut présenter une répartition non homogène de sa composition chimique et de son indice de réfraction. Elle peut par exemple présenter un profil d'indice de réfraction avec un gradient. En tout état de cause, une valeur moyenne de l'indice de réfraction dans les couches bas indice est strictement inférieure à une valeur moyenne de l'indice de réfraction dans la couche fort indice.

Les couches fort indice et bas indice s'étendent chacune dans des plans parallèles au plan (Oxy), et sont superposées les unes au-dessus des autres le long de l'axe (Oz). On nomme « plan du composant optique », un plan parallèle au plan (Oxy).

Le premier substrat d'appui 110A et l'empilement de couches comportant le premier guide d'onde planaire 120A sont superposés ensemble le long de l'axe (Oz). Le premier substrat d'appui 110A s'étend sur le dessus de l'empilement, en recouvrant le premier guide d'onde planaire 120A. Ici, le premier substrat d'appui 110A est en contact physique direct avec l'une couche bas indice 101A de l'empilement de couches, sans couche intercalaire entre les deux.

Le premier guide d'onde planaire 120A comporte au moins un premier réseau de diffraction 130A, ici un unique réseau de diffraction. Le premier réseau de diffraction 130A est configuré pour extraire, hors du plan du premier guide d'onde planaire, la lumière circulant dans ledit premier guide d'onde planaire 120A.

Ici, le premier réseau de diffraction 130A est formé dans la couche de cœur du premier guide d'onde planaire 120A, du côté opposé au premier substrat d'appui 110A. L'invention n'est cependant pas limitée à cet agencement, le premier réseau de diffraction pouvant également s'étendre dans la couche de cœur, du côté du premier substrat d'appui, ou dans la couche de gaine inférieure ou supérieure du premier guide d'onde planaire 120A. La profondeur du premier réseau de diffraction 130A est avantageusement inférieure ou égale à la moitié de l'épaisseur de la couche dans laquelle il est formé, par exemple égale à un quart de cette épaisseur.

Le premier réseau de diffraction 130A est constitué de portions fort indice et de portions bas indice, avec les portions fort indice constituées du matériau de la couche fort indice 102A, et avec les portions bas indice constituées du matériau des couches bas indice 101A.

Le premier réseau de diffraction 130A s'étend dans un plan (Oxy). Le premier réseau de diffraction 130A est ici un réseau à une dimension, avec ici des motifs invariants selon l'axe (Ox). La figure 1B illustre le composant optique 100, selon une vue en coupe dans un plan AA' parallèle au plan (Oxy), passant par le premier réseau de diffraction 130A. Elle montre des motifs en forme de barreaux parallèles à l'axe (Ox). Comme illustré à la figure 1B, le premier guide d'onde planaire 102A et le premier réseau de diffraction 130A sont bien sûr limités dans la direction de l'axe (Ox). De préférence, l'étendue du premier réseau de diffraction 130A le long de l'axe (Ox) est sensiblement égale à la dimension selon le même axe de l'échantillon à analyser (voir plus loin). En outre, l'étendu du premier guide d'onde planaire 102A le long de l'axe (Ox) est sensiblement égale à la dimension selon le même axe du premier réseau de diffraction 130A.

Le premier réseau de diffraction 130A présente un premier pas de répartition des motifs, PA, qui est de préférence constant sur toute l'étendue dudit réseau. (Si ce pas n'était pas constant sur toute l'étendue dudit réseau, on considérerait alors la valeur moyenne du pas de répartition des motifs sur l'étendue du réseau de diffraction.) La valeur du pas PA est adaptée pour extraire de la lumière hors du premier guide d'onde planaire 120A, à une première longueur d'onde nommée première longueur d'onde d'extraction, et dans deux premières directions d'extraction (aux ordres de diffraction +1 et -1). Les deux premières directions d'extraction sont symétriques l'une de l'autre, selon une symétrie planaire relativement à un plan (Oxy) passant par le premier réseau de diffraction 130A. Pour simplifier, on peut considérer que le premier réseau de diffraction 130A est associé à une première longueur d'onde d'extraction et à une première direction d'extraction. La première direction d'extraction est définie par un angle d'extraction θA, qui est défini relativement à la normale au plan (Oxy) du composant optique 100.

De façon similaire, le bras de référence 10B comporte ici un second substrat d'appui 110B et un second guide d'onde planaire 120B. Un second réseau de diffraction 130B est formé dans le second guide d'onde planaire 120B. Le second substrat d'appui 110B présente une face transverse 113B, nommée seconde face de sortie, située au regard de la première face de sortie 113A.

Le bras de référence 10B est sensiblement symétrique du bras objet 10A, selon une symétrie planaire relativement à un plan P parallèle au plan (Oxz) et passant entre le bras objet 10A et le bras de référence 10B. Ici, le bras de référence 10B et le bras objet 10A sont exactement symétriques l'un de l'autre.

Le second substrat d'appui 110B est constitué du même matériau que le premier substrat d'appui 110A, et présente une même épaisseur selon l'axe (Oz).

De même, les premier et second guides d'onde planaires 120A, 120B sont formés dans des empilements similaires de couches bas indice et fort indice. Ainsi, les premier et second guides d'onde planaires sont formés de couches de cœur respectives en un même matériau fort indice, et de couches de gaine respectives en un même matériau bas indice. Par conséquent, le premier réseau de diffraction 130A et le second réseau de diffraction 130B sont constitués chacun de portions fort indice en un même matériau fort indice et de portions bas indice en un même matériau bas indice. (Les différents matériaux mentionnés ici ont avantageusement, mais pas nécessairement, une composition chimique homogène dans l'espace.)

Les premier et second substrats d'appui 110A, 110B sont agencés coplanaires, avec leurs faces respectives supérieures coplanaires et leurs faces respectives inférieures coplanaires, toutes parallèles à un plan (Oxy). De même, les premier et second guides d'onde planaires 120A, 120B sont agencés coplanaires, avec chacun une couche de cœur parallèle à un plan (Oxy). De la même façon également, les premier et second réseaux de diffraction 130A, 130B sont également formés coplanaires.

Les premier et second réseaux de diffraction 130A, 130B sont sensiblement symétriques l'un de l'autre, ici exactement symétriques l'un de l'autre relativement au plan P. Le pas PB de répartition des motifs dans le second réseau de diffraction 130B est sensiblement égal au pas PA de répartition des motifs dans le premier réseau de diffraction 130A. Le second réseau de diffraction 130B est ainsi associé à une seconde longueur d'onde d'extraction égale à la première longueur d'onde d'extraction, et à une seconde direction d'extraction sensiblement égale à la première direction d'extraction. La seconde direction est définie par un angle d'extraction θB, qui est défini relativement à la normale au plan (Oxy) du composant optique 100. Ici, les pas PA et PB sont égaux, de sorte que les angles θA et θB sont égaux en valeur absolue, et de signes opposés. Les première et seconde directions d'extraction sont donc symétriques l'une de l'autre relativement au plan P.

Le bras objet 10A et le bras de référence 10B sont chacun optimisés pour une gamme spectrale étroite, par exemple d'étendue inférieure à 0,5 µm.

On peut définir, dans le composant optique 100, une série d'étages superposés le long de l'axe (Oz), et comportant :
- un étage bas indice inférieur, comportant les gaines inférieures respectives des premier et second guides d'onde planaires 120A, 120B, toutes deux en matériau bas indice ;
- un étage fort indice, comportant les couches de cœur respectives des premier et second guides d'onde planaires 120A, 120B, toutes deux en matériau fort indice d'indice de réfraction strictement supérieur à celui du matériau bas indice ;
- un étage bas indice supérieur, comportant les gaines supérieures respectives des premier et second guides d'onde planaires 120A, 120B, toutes deux en matériau bas indice ; et
- ici, un étage d'appui, comportant les premier et second substrats de support 110A, 110B.

Sur la figure 1A, on a représenté en pointillés une surface 21, parallèle au plan (Oxy), et située du même côté que les substrats d'appui 110A, 110B relativement aux guides d'onde planaires 120A, 120B. Ici, la surface 21 s'étend dans un même plan que les faces supérieures respectives 111A, 111B des substrats d'appui 110A, 110B, du côté opposé aux guides d'onde planaires 120A, 120B.

On suppose que la surface 21 est optiquement réfléchissante, du côté du composant optique, aux longueurs d'onde d'extraction des premier et second réseaux de diffraction 130A, 130B. Le composant optique 100 est configuré pour qu'une partie au moins de la lumière extraite par le premier réseau de diffraction 130A, et réfléchie spéculairement sur la surface 21, interfère avec une partie au moins de la lumière extraite par le second réseau de diffraction 130B et réfléchie sur la surface 21.

La figure 2 illustre de façon schématique le composant optique 100 des figures 1A et 1B, en utilisation. Sur la figure 2, on a représenté en pointillés un échantillon à analyser 22 et un échantillon de référence 23. Pour simplifier, on ignore sur cette figure la réfraction entre un guide d'onde planaire et le substrat d'appui correspondant.

Dans la suite, la surface 21 sert simplement à définir le positionnement de l'échantillon à analyser 22 et de l'échantillon de référence 23. Elle ne correspond pas à un élément réel du composant optique 100.

L'échantillon à analyser 22 est un échantillon chimique ou biologique. Il comporte une face inférieure, située du côté du composant optique 100, et s'étendant au niveau d'une première zone Z1 de la surface 21. La première zone Z1 est par exemple un carré ou un rectangle, de côté compris entre 1 mm et 10 mm.

L'échantillon de référence 23 est constitué d'un matériau connu. Il présente une face inférieure qui s'étend parallèle au plan (Oxy), sur une seconde zone Z2 de la surface 21. Les dimensions de la seconde zone Z2 sont similaires à celles de la première zone Z1.

En utilisation, un faisceau de lumière 201A à la première longueur d'onde d'extraction est injecté en entrée du premier guide d'onde planaire 120A, puis extrait par le premier réseau de diffraction. La lumière est extraite hors du premier guide d'onde planaire 120A dans deux directions symétriques. Ici, on considère uniquement la lumière extraite en direction du premier substrat d'appui 110A. Cette lumière traverse le premier substrat d'appui 110A, d'où elle émerge au niveau de la première face de sortie 113A, sous la forme d'un faisceau lumineux nommé faisceau objet 202A. Le faisceau objet 202A se propage jusqu'à l'échantillon à analyser 22, au niveau duquel il est réfléchi, ici par réflexion spéculaire, après avoir subi des déphasages locaux liés aux indices locaux dans l'échantillon à analyser 22. Après réflexion, le faisceau objet 202A se propage jusqu'à une zone 203 destinée à recevoir un détecteur matriciel.

De façon similaire, un faisceau de lumière 201B à la seconde longueur d'onde d'extraction (égale à la première longueur d'onde d'extraction) est injecté en entrée du second guide d'onde planaire 120B, puis extrait par le second réseau de diffraction. Les première et seconde longueurs d'onde d'extraction étant égales, le faisceau de lumière 201B présente la même longueur d'onde centrale que le faisceau de lumière 201A. On détaille dans la suite des modes de réalisation avantageux incorporant un diviser, et permettant d'injecter simultanément les faisceaux de lumière 201A et 201B dans les premier et second guides d'onde planaires 120A, 120B. La lumière est extraite hors du second guide d'onde planaire 120B dans deux directions symétriques. Ici, on considère uniquement la lumière extraite en direction du second substrat d'appui 110B. Cette lumière traverse le second substrat d'appui 110B, d'où elle émerge au niveau de la seconde face de sortie 113B, sous la forme d'un faisceau lumineux nommé faisceau de référence 202B. Le faisceau objet 202A et le faisceau de référence 202B sont sensiblement symétriques l'un de l'autre relativement au plan P (voir figure 1A), ici exactement symétriques. Le faisceau de référence 202B se propage jusqu'à l'échantillon de référence 23, au niveau duquel il est réfléchi, ici par réflexion spéculaire, après avoir subi des déphasages locaux liés aux indices locaux dans l'échantillon de référence 23. Après réflexion, le faisceau de référence 202B se propage jusqu'à la zone 203.

Au niveau de la zone 203, le faisceau objet 202A et le faisceau de référence 202B se recouvrent et interfèrent entre eux. La figure d'interférence peut être acquise par un détecteur matriciel positionné dans la zone 203, sensible à la longueur d'onde du faisceau objet 202A et du faisceau de référence 202B. Cette figure d'interférences permet d'obtenir une carte de répartition des déphasages sur l'échantillon à analyser 22. Cette dernière peut permettre à son tour d'obtenir une carte de répartition de valeurs locales d'indice de réfraction, puis une carte de répartition de compositions chimiques ou biologiques.

Dans l'exemple d'utilisation décrit ici, la lumière est réfléchie par réflexion spéculaire sur l'échantillon à analyser et l'échantillon de référence. En variante, la lumière peut être réfléchie plutôt par réflexion diffuse. Selon une autre variante, l'échantillon à analyser, et éventuellement l'échantillon de référence, présente une épaisseur réduite et s'étend sur une lame d'appui respective, optiquement réfléchissante à la longueur d'onde des faisceaux objet et de référence. La lumière traverse une première fois l'échantillon, est réfléchie sur la lame d'appui, puis traverse une seconde fois l'échantillon et émerge hors de ce dernier avant d'aller former des interférences. La lame d'appui s'étend du côté de l'échantillon opposé au composant optique, et correspond à l'emplacement de la surface optiquement réfléchissante 21. Cette variante, basée sur une réflexion de la lumière et impliquant deux traversées de la lumière à travers l'échantillon, est nommée « transflexion ».

Pour éviter des interférences destructives dues à des réflexions internes de la lumière extraite dans la direction opposée aux substrats d'appui 110A, 110B, le composant optique 100 peut comprendre des couches respectives d'absorption ou des surfaces respectives de diffusion, du côté des guides d'onde planaires opposé aux substrats d'appui. En complément ou en variante, l'épaisseur des couches bas indice, sous les guides d'onde planaires, est adaptée pour obtenir des interférences constructives entre la lumière extraite vers les substrats d'appui et la lumière extraite dans la direction opposée.

Les premier et second substrats d'appui 110A, 110B sont chacun transparents à la longueur d'onde d'extraction des premier et second réseaux de diffraction. Ils présentent de préférence des pertes optiques inférieures à 3 dB/cm à ladite longueur d'onde d'extraction. Des substrats d'appui 110A, 110B en silicium vérifient cette condition dans l'infrarouge notamment. L'invention n'est cependant pas limitée à ce matériau. Lorsque le composant optique est adapté à une utilisation avec de la lumière visible, les premier et second substrats d'appui 110A, 110B sont alors constitués d'un matériau optiquement transparent dans le visible, par exemple le diamant ou un verre (SiO₂, BF33, quartz, etc) ou un polymère optique, etc.

De préférence, les premier et second guides d'onde planaires 120A, 120B sont chacun monomodes selon l'axe (Oz), et à leur longueur d'onde d'extraction.

Comme illustré à la figure 2, le faisceau objet 202A s'étale, sur la surface 21, selon une surface dont l'étendue, le long de l'axe (Oy), est ici égale à la longueur I du premier réseau de diffraction le long de ce même axe. Des valeurs typiques pour la longueur I sont entre 1000 µm et 2000 µm, par exemple 1500 µm. Il existe un lien entre l'épaisseur du premier substrat d'appui 110A et la longueur I, permettant de s'assurer que toute la lumière extraite vers le premier substrat d'appui 110A arrive bien sur la première face de sortie 113A de ce dernier. La même remarque s'applique dans le bras de référence, avec le faisceau de référence 202B, la longueur du second réseau de diffraction, et l'épaisseur du second substrat d'appui. Les longueurs respectives des premier et second réseaux de diffraction sont de préférence identiques.

Dans un exemple de réalisation particulier, la longueur d'onde d'extraction des premier et second réseaux de diffraction vaut 7,25 µm. Les couches de gaine sont en alliage SiGe à 40% de germanium et les couches de cœur sont en germanium. Les couches de cœur présentent chacune une épaisseur de 2 µm (pour que les guides soient monomodes à 7,25 µm). La zone éclairée sur l'échantillon est un carré de côté 1,36 mm. L'épaisseur des substrats d'appui est de 641 µm, qui est l'épaisseur minimale permettant que toute la lumière extraite vers les substrats d'appui arrive sur les faces de sortie respectives de ces derniers. Le détecteur matriciel est situé à 450 µm des bras objet et de référence. Le pas des réseaux de diffraction vaut 6,51 µm, ce qui permet que la lumière arrive à incidence normale sur les faces de sortie inclinées à 54,74°. La profondeur des réseaux est ici de 0,5 µm. Le détecteur matriciel est un carré de 40^{∗}40 pixels, repartis sur un carré de côté 1,36 mm.

Dans chaque réseau de diffraction 130A, 130B, l'extraction de lumière se fait progressivement, au fur et à mesure de la propagation de la lumière dans ce dernier (afin d'avoir un éclairage homogène sur la surface à éclairer). Ici, la lumière se propage dans le réseau de diffraction 130A, respectivement 130B, le long de l'axe (Oy), et la lumière est extraite par ledit réseau au fur et à mesure de cette propagation. En chaque point du réseau de diffraction 130A, respectivement 130B, le long de l'axe (Oy), la quantité de lumière extraite est égale au produit d'une valeur locale du taux d'extraction multipliée par la quantité de lumière restante, dans le guide d'onde planaire correspondant, à l'emplacement considéré le long de l'axe (Oy). Ainsi, comme la quantité de lumière restante dans le guide d'onde planaire diminue au fur et à mesure de la propagation de la lumière le long de l'axe (Oy), une valeur constante du taux d'extraction dans les réseaux de diffraction conduirait à une extraction inhomogène de la lumière le long de l'axe (Oy). Ainsi, de manière avantageuse, chacun des réseaux de diffraction 130A, respectivement 130B, présente une valeur locale du taux d'extraction qui varie de manière monotone le long de l'axe (Oy). En particulier, la valeur locale du taux d'extraction augmente au fur et à mesure que l'on s'éloigne d'un bord d'entrée du guide d'onde planaire correspondant, au niveau duquel la lumière est injectée. Dit autrement, la valeur locale du taux d'extraction augmente au fur et à mesure que l'on s'approche de la face de sortie 113A, respectivement 113B. Chaque valeur locale peut être calculée sur un seul motif du réseau de diffraction considéré, ou être une valeur moyenne se rapportant à plusieurs motifs voisins, par exemple moins de cinq motifs voisins. Dans chaque réseau de diffraction, la valeur locale du taux d'extraction varie, le long de l'axe (Oy), selon une loi non linéaire.

La valeur du taux d'extraction d'un réseau de diffraction est fonction d'une valeur de son facteur de remplissage. Dans chaque motif du réseau de diffraction considéré, le facteur de remplissage est égal à la surface de la portion fort indice, divisée par la surface totale du motif correspondant, où lesdites surfaces sont définies dans un plan de coupe parallèle au plan (Oxy). Le facteur de remplissage peut également être considéré comme un rapport de volumes (volume occupé par la portion bas indice, divisé par le volume total du motif correspondant). En particulier, ces deux définition sont exactement équivalentes pour un réseau de diffraction est de profondeur constante. L'extraction est d'autant plus élevée que le facteur de remplissage est proche de 50% (modulation d'indice la plus forte). Par conséquent, de manière avantageuse, dans chacun des réseaux de diffraction 130A, 130B, une valeur locale du facteur de remplissage varie de manière monotone entre 0% et 50%, ou entre 100% et 50%, d'une extrémité à l'autre du réseau de diffraction et au fur et à mesure que l'on s'éloigne d'un bord d'entrée du guide d'onde planaire 120A, respectivement 120B. De manière avantageuse, le facteur de remplissage ne dépasse pas 0,5 (50%). Dans ce cas, plus le facteur de remplissage est élevé, plus le taux d'extraction est élevé, et inversement. Ainsi, de manière avantageuse, dans chacun des réseaux de diffraction 130A, 130B, une valeur locale du facteur de remplissage augmente au fur et à mesure que l'on s'éloigne d'un bord d'entrée du guide d'onde planaire 120A, respectivement 120B. Dit autrement, dans chacun des réseaux de diffraction 130A, 130B, une valeur locale du facteur de remplissage augmente au fur et à mesure que l'on s'approche de la première face de sortie 113A, respectivement seconde face de sortie 113B. Là encore, chaque valeur locale peut être calculée sur un seul motif du réseau de diffraction, ou être une valeur moyenne se rapportant à plusieurs motifs voisins, par exemple moins de cinq motifs voisins.

En complément ou en variante, la variation du taux d'extraction peut être obtenue à l'aide de réseaux de diffraction dont la profondeur varie le long de l'axe (Oz).

Dans chacun des guides d'onde planaires 120A, 120B, le réseau de diffraction 130A, 130B est configuré pour extraire la lumière hors dudit guide d'onde planaire, à la longueur d'onde d'extraction (commune aux deux réseaux de diffraction), et dans une direction d'extraction définie par un angle d'extraction θA, respectivement θB.

La valeur de θA est définie par le pas de répartition des motifs dans le premier réseau de diffraction. La valeur de θA est adaptée pour que la lumière extraite du premier guide d'onde planaire puisse émerger hors du premier substrat d'appui, au niveau de la première face de sortie 113A, et compte tenu de la réfraction à l'interface entre le premier guide d'onde planaire et le premier substrat d'appui. Pour cela, cette lumière doit arriver sur la première face de sortie 113A, avec un angle d'incidence strictement inférieur à un premier angle critique de réflexion totale interne (angles définis relativement à la normale à ladite face de sortie 113A). Le premier angle critique de réflexion totale interne est déterminé par les lois de Snell-Descartes, et dépend de l'indice de réfraction du premier substrat d'appui 110A et de l'indice de réfraction du milieu en contact avec la première face de sortie 113, en utilisation. Ce milieu est généralement de l'air, de sorte que le premier angle critique de réflexion totale interne vaut environ 17° avec un substrat d'appui en silicium.

La même chose s'applique pour la valeur de θB.

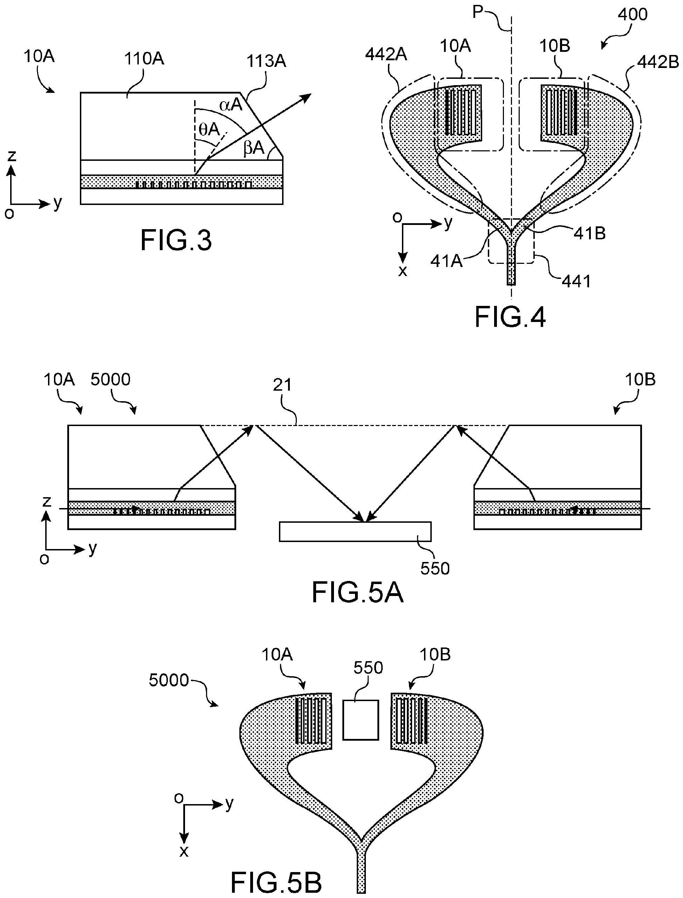

La figure 3 est une vue de détail de la figure 1A, montrant uniquement le bras objet 10A. La première face de sortie 113A est inclinée d'un angle βA relativement au plan (Oxy). Ici, le premier substrat d'appui 110A est en silicium cristallin, et l'angle βA est égal à 54,74°, ce qui correspond à un angle de gravure anisotrope d'un cristal de type cubique à faces centrés (par exemple du silicium) ou d'un cristal à maille carrée de type diamant. On nomme αA l'angle formé entre la normale au plan (Oxy) du composant optique et l'axe de propagation de la lumière dans le premier substrat d'appui, après réfraction à l'interface entre le premier guide d'onde planaire et le premier substrat d'appui. Pour simplifier, le bras objet 10A est configuré ici de sorte que cette lumière arrive à incidence normale sur la première face de sortie 113A. Pour cela, la valeur prise par l'angle αA doit être égale à la valeur prise par l'angle βA, ici égale à 54,74°. En variante, on peut avoir βA égal à 45° (plan 110 d'un cristal cubique à faces centrées). L'incidence normale sur la première face de sortie 113A permet que la lumière ne soit pas déviée à la traversée de cette dernière.

En tout état de cause, de préférence, la valeur d'un angle formé entre le plan du composant optique et la première face de sortie 113A, est sensiblement égal à la valeur de l'angle d'extraction par le premier réseau de diffraction corrigé du décalage angulaire apporté par la réfraction à l'interface entre le premier guide d'onde planaire et le premier substrat d'appui, à plus ou moins 5° près, et même à plus ou moins 1° près (avec l'angle d'extraction défini relativement à la normale au plan du composant optique).

La même chose s'applique dans le bras de référence.

La figure 4 illustre de manière schématique, selon une vue de dessus, un composant optique 400 selon un deuxième mode de réalisation de l'invention. Le composant optique 400 comporte les éléments suivants :
- un bras objet 10A et un bras de référence 10B, tels que décrits ci-dessus ;
- un diviseur 441 à une entrée et deux sorties ; et
- un premier guide d'adaptation 442A et un second guide d'adaptation 442B.

Le diviseur 441 (ou splitter) est configuré pour recevoir en entrée un faisceau lumineux initial, et pour répartir celui-ci vers les deux sorties 41A, 41B. La répartition est avantageusement 50/50, mais d'autres répartitions ne sont pas exclues, notamment pour équilibrer au mieux la puissance optique émergeant du bras objet avec la puissance optique émergeant du bras de référence. Le diviseur 441 peut comprendre un élément parmi une jonction en Y, ou un coupleur MMI, etc. Le diviseur 441 permet d'injecter des faisceaux lumineux synchronisés et de même longueur d'onde, dans chacun parmi le premier et le second guides d'onde planaires.

Le premier guide d'adaptation 442A s'étend entre la sortie 41A du diviseur et le bras objet 10A. Il réalise une adaptation de mode adiabatique, grâce à une largeur qui augmente progressivement depuis son extrémité côté sortie 41A jusqu'à son extrémité côté bras objet 10A. Il présente une courbure, pour faire tourner la direction de propagation de la lumière, ici de 90° dans un plan (Oxy). Ladite courbure est également adiabatique.

De façon similaire, le second guide d'adaptation 442B s'étend entre la sortie 41B du diviseur et le bras de référence 10B. Il présente également une largeur qui augmente progressivement depuis son extrémité côté sortie 41B jusqu'à son extrémité côté bras de référence 10B.

La largeur désigne ici une dimension parallèle au plan (Oxy), et orthogonale à la direction de propagation de la lumière dans le premier guide d'adaptation 442A, respectivement dans le second guide d'adaptation 442B.

Les premier et second guides d'adaptation 442A, 442B sont chacun recourbés, de manière à injecter de la lumière dans le bras objet 10A, respectivement dans le bras de référence 10B, selon des directions d'injection de sens opposés. Ici, ces directions d'injection sont parallèles entre elles, et même confondues.

Le diviseur 441 et les guides d'adaptation 442A, 442B sont formés dans un même empilement de couches que les guides d'onde planaires du bras objet et du bras de référence. Ils sont constitués du matériau des couches de cœur desdits guides d'onde planaires, et entourés par le matériau des couches de gaines.

Là encore, le composant optique est sensiblement symétrique, selon une symétrie planaire relativement au plan P. Ici, il s'agit d'une exacte symétrie.

Les figures 5A et 5B illustrent de manière schématique, selon deux vues en coupe respectives, un système 5000 selon l'invention.

Le système 5000 comporte ici :
- un composant optique tel que décrit en référence à la figure 4, avec notamment un bras objet 10A et un bras de référence tels qu'illustrés aux figures 1A et 1B ; et
- un détecteur matriciel 550, sensible à la longueur d'onde des faisceaux objet et de référence, ici sensible dans l'infrarouge.

Le détecteur matriciel 550 est de préférence un détecteur infrarouge matriciel, par exemple une matrice de bolomètres, ou une matrice de photodiodes. En variante, le détecteur matriciel peut être sensible dans le visible, constitué par exemple d'une matrice de photodiodes. Le détecteur matriciel 550 s'étend parallèle au plan (Oxy), entre le bras objet 10A et le bras de référence 10B, dans la zone 203 identifiée en figure 2. Une distance selon (Oz) entre le détecteur matriciel 550 et la surface 21 est comprise de préférence entre 100 µm et 1,5 µm. De manière avantageuse, le détecteur matriciel 550 s'étend à la même hauteur, selon l'axe (Oz), que les faces inférieures des guides d'onde planaires, du côté opposé aux substrats d'appui. Le composant optique selon l'invention peut alors servir d'entretoise entre l'échantillon à analyser (et ici l'échantillon de référence) et un module de détection comportant le détecteur matriciel 550. Il n'y a pas d'optique de formation d'image entre le détecteur matriciel 550 et la surface 21 recevant les échantillons, en utilisation.

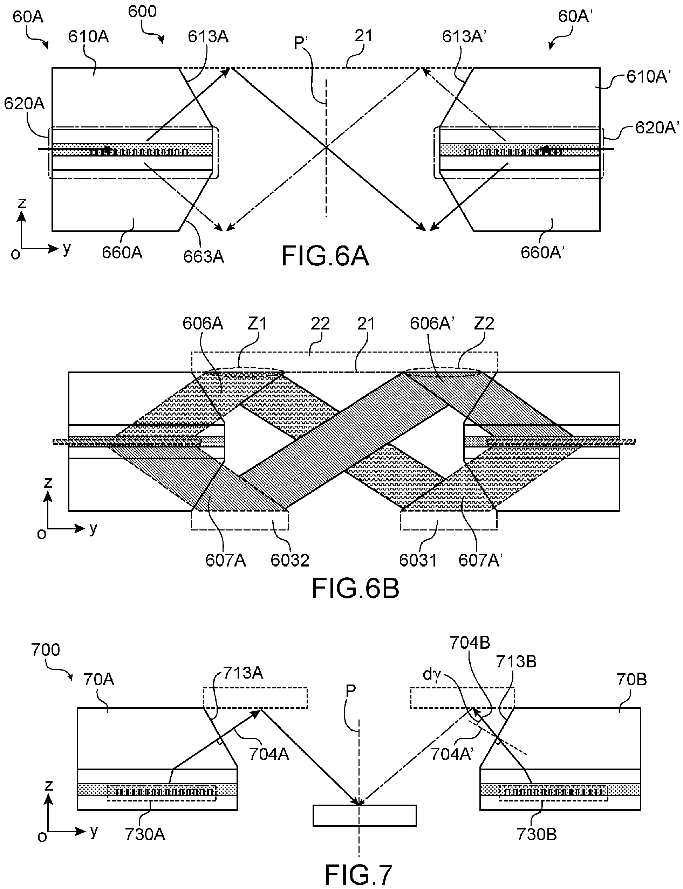

La figure 6A illustre de manière schématique un troisième mode de réalisation d'un composant optique 600 selon l'invention, qui ne sera décrit que pour ses différences relativement au mode de réalisation des figures 1A et 1B.

Dans ce mode de réalisation, le bras objet 60A comporte en outre un premier substrat inférieur 660A, avec le premier guide d'onde planaire 620A intercalé entre le premier substrat d'appui 610A et le premier substrat inférieur 660A. Ici, le premier substrat inférieur 660A s'étend en contact physique direct avec une couche bas indice de l'empilement dans lequel est formé le premier guide d'onde planaire.

Le premier substrat inférieur 660A est constitué d'un matériau transparent à la longueur d'onde d'extraction des premier et second réseaux de diffraction. Ici, le premier substrat inférieur 660A est constitué d'un matériau transparent dans l'infrarouge, de préférence du silicium. Lorsque le composant optique est adapté à une utilisation avec de la lumière visible, premier substrat inférieur 660A est alors constitué d'un matériau optiquement transparent dans le visible, par exemple le diamant ou un verre (SiO₂, BF33, quartz, etc) ou un polymère optique, etc. Le premier substrat inférieur 660A est délimité notamment par deux faces planes parallèle au plan (Oxy), ainsi que par une face transverse 663A, orientée en biais relativement au plan (Oxy) et reliant lesdites faces planes.

En utilisation, la lumière est extraite par le premier réseau de diffraction, hors du premier guide d'onde planaire, en direction du premier substrat d'appui 610A et en direction du premier substrat inférieur 660A, selon deux premières directions d'extraction symétriques l'une de l'autre relativement à un plan parallèle au plan (Oxy). La lumière extraite en direction du premier substrat inférieur 660A traverse ce dernier, et émerge de celui-ci au niveau de sa face transverse 663A. Ainsi de la lumière émerge du bras objet 60A selon deux directions sensiblement symétriques relativement à un plan (Oxy). Elle émerge du bras objet 60A depuis le premier substrat d'appui 610A, en étant orientée en direction de la surface 21 telle que mentionnée en référence à la figure 1A, et depuis le premier substrat inférieur 660A, en étant orientée selon une direction sensiblement symétrique relativement à un plan (Oxy).

Le bras objet 60A peut présenter une symétrie planaire, relativement à un plan de symétrie parallèle au plan (Oxy) et passant par la couche de cœur du premier guide d'onde planaire. Le premier substrat d'appui présente de préférence une même épaisseur que le premier substrat inférieur. Avantageusement, mais de manière non limitative, la face de sortie 613A du premier substrat d'appui 610, et la face transverse 663A du premier substrat inférieur 660A, sont inclinées d'un même angle en valeur absolue relativement au plan (Oxy).

De manière similaire, le bras de référence 60A' comporte en outre un second substrat inférieur 660A', avec le second guide d'onde planaire 620A' intercalé entre le second substrat d'appui 610A' et le second substrat inférieur 660A'. Le second substrat inférieur 660A' est constitué du même matériau que le premier substrat inférieur 660A. Les bras 60A et 60A' sont similaires. En utilisation, de la lumière émerge donc du bras de référence 60A', selon deux directions sensiblement symétriques relativement à un plan (Oxy). Elle émerge du bras de référence 60A' depuis le second substrat d'appui 610A', en étant orientée en direction de la surface 21 telle que mentionnée en référence à la figure 1A, et depuis le second substrat inférieur 660A', en étant orientée selon une direction sensiblement symétrique relativement à un plan (Oxy).

Le bras de référence 60A' et le bras objet 60A sont sensiblement symétriques l'un de l'autre relativement à un plan de symétrie P' parallèle au plan (Oxz) et passant entre le bras objet 60A et le bras de référence 60A'.

Le composant optique 600 est configuré pour que :
- la lumière émergeant du bras objet 60A par le premier substrat d'appui 610A et réfléchie sur la surface 21 interfère avec la lumière émergeant du bras de référence 60A' par le second substrat inférieur 660A' ; et
- la lumière émergeant du bras de référence 60A' par le second substrat d'appui 610A' et réfléchie sur la surface 21 interfère avec la lumière émergeant du bras objet 60A par le premier substrat inférieur 660A.

La figure 6B illustre de manière schématique le composant optique 600, en utilisation. Dans ce mode de réalisation, l'échantillon à analyser 22 s'étend sur une plus grande étendue, et il n'y a pas d'échantillon de référence.

Pour simplifier, on a ignoré sur les figures 6A et 6B la réfraction aux interfaces entre un guide d'onde planaire et le substrat d'appui correspondant, et aux interfaces entre un guide d'onde planaire et le substrat inférieur correspondant.

Dans la suite, la surface 21 est une surface virtuelle, servant simplement à définir le positionnement de l'échantillon à analyser 22.

Un faisceau lumineux 606A, émergeant du bras objet 60A en direction de la surface 21, arrive sur une première zone Z1 de la surface 21, sur laquelle s'étend une première région de l'échantillon à analyser 22. Le faisceau lumineux 606A est réfléchi sur l'échantillon, après avoir subi des déphasages locaux liés aux indices locaux dans l'échantillon à analyser 22. Après réflexion, le faisceau lumineux 606A se propage jusqu'à une zone 6031 destinée à recevoir une partie d'un détecteur matriciel.

De façon similaire, un faisceau lumineux 606A', émerge du bras de référence 60A' en direction de la surface 21, arrive sur une seconde zone Z2 de la surface 21, sur laquelle s'étend une seconde région de l'échantillon à analyser 22, puis est réfléchi sur l'échantillon, après avoir subi des déphasages locaux liés aux indices locaux dans l'échantillon à analyser 22. Après réflexion, le faisceau lumineux 606A' se propage jusqu'à une zone 6032 destinée à recevoir une partie d'un détecteur matriciel.

Un faisceau lumineux 607A' émerge du bras de référence 60A' dans une direction symétrique à la direction du faisceau 606A' (relativement à un plan parallèle au plan (Oxy)). Ce faisceau lumineux 607A' arrive directement sur la zone 6031 sans passer par l'échantillon à analyser. Dans cette zone 6031, il interfère avec le faisceau lumineux 606A renvoyé par l'échantillon à analyser 22. Les interférences permettent d'obtenir une première carte de déphasages, se rapportant à la zone Z1 de l'échantillon à analyser.

De la même manière, un faisceau lumineux 607A émerge du bras objet 60A dans une direction symétrique à la direction du faisceau 606A (relativement à un plan parallèle au plan (Oxy)). Ce faisceau lumineux 607A arrive directement sur la zone 6032 sans passer par l'échantillon à analyser. Dans cette zone 6032, il interfère avec le faisceau lumineux 606A' renvoyé par l'échantillon à analyser 22. Les interférences permettent d'obtenir une seconde carte de déphasages, se rapportant à la zone Z2 de l'échantillon à analyser.

Le composant optique 600 fonctionne donc comme deux dispositifs interférométriques, dédiés chacun à une zone spécifique sur la surface 21. Il permet de doubler la surface éclairée sur l'échantillon à analyser, pour un même encombrement latéral dudit composant optique.

Dans ce mode de réalisation, le bras objet 60A et le bras de référence 60A' remplissent une même fonction. Chaque bras fournit en effet à la fois un faisceau de référence et un faisceau objet, émis respectivement vers le bas et vers le haut, selon deux directions sensiblement symétriques relativement à un plan (Oxy). Dans tout le texte, le bras objet peut être nommé simplement « premier bras » et le bras de référence peut être nommé simplement « second bras ».

Dans un exemple de réalisation particulier, la longueur d'onde d'extraction des premier et second réseaux de diffraction vaut 7,25 µm. Les couches de gaine sont en alliage SiGe à 40% de germanium et les couches de cœur sont en germanium. Les couches de cœur présentent chacune une épaisseur de 2 µm (pour que les guides soient monomodes à 7,25 µm). La zone éclairée sur l'échantillon est un rectangle de 1,36^{∗}2,72 mm². L'épaisseur des substrats d'appui et des substrats inférieurs est de 680 µm. Le pas des réseaux de diffraction vaut 4,87 µm, ce qui permet que la lumière arrive à incidence normale sur les faces de sortie inclinées à 45°. La profondeur des réseaux est ici de 0,5 µm.

Dans ce mode de réalisation, il est avantageux que les première et seconde faces de sortie 613A, 613A' des substrats d'appui soient inclinés à 45° relativement au plan (Oxy) des guides d'onde planaires. Cet angle correspond à un angle de gravure d'un cristal à maille cubique faces centrées, et permet de minimiser l'étendue d'une zone aveugle entre les zones Z1 et Z2. Une autre solution pour limiter l'étendue de cette zone aveugle consiste à modifier l'angle d'extraction des réseaux de diffraction, mais au risque de perdre l'incidence normale sur les première et seconde faces de sortie 613A, 613A'. Par exemple, on conserve des faces de sorties inclinées à 54,74° et on choisit les angles d'extraction et les positions des réseaux de diffraction de manière à minimiser l'étendue de la zone aveugle.

De préférence, le bras objet et le bras de référence sont configurés chacun pour que la puissance optique extraite du côté du substrat d'appui soit supérieure à la puissance optique extraite du côté du substrat inférieur. Cela permet d'égaliser les puissances optiques des faisceaux qui interfèrent entre eux, compte tenu de la perte de puissance à la réflexion sur l'échantillon. Ces équilibrages peuvent être obtenus par un choix adapté des milieux en contact respectivement avec les substrats d'appui et les substrats inférieur, de leurs côtés respectifs opposés aux guides d'onde planaires. Le composant optique selon l'invention peut donc comprendre une couche inférieure, respectivement sous le premier substrat inférieur et sous le second substrat inférieur, d'indice de réfraction adapté pour réaliser cet équilibrage des puissances optiques.

Dans ce mode de réalisation, la longueur de cohérence de la lumière injectée dans le composant optique doit être supérieure à la différence de chemin optique entre un faisceau extrait côté substrat d'appui d'un bras et un faisceau extrait côté substrat inférieur de l'autre bras.

L'invention couvre également un système optique comportant le composant optique 600, et un détecteur matriciel qui s'étend à la fois dans les zones 6031 et 6032. Ledit détecteur matriciel s'étend parallèle au plan (Oxy), ici à hauteur des faces inférieures des substrats inférieurs 660A, 660A', de leurs côtés opposés aux guides d'onde planaires.

L'invention couvre également des variantes dans lesquelles le composant optique comporte en outre un diviseur et des guides d'adaptation, comme illustré à la figure 4. Ces variantes sont particulièrement avantageuses, en ce qu'elles permettent d'injecter des faisceaux lumineux synchronisés et de même longueur d'onde, dans chacun parmi les premier et second guides d'onde planaires.

La figure 7 illustre de manière schématique un quatrième mode de réalisation d'un composant optique 700 selon l'invention, qui ne sera décrit que pour ses différences relativement au mode de réalisation des figures 1A et 1B. Dans le mode de réalisation de la figure 7, le composant optique 700 est configuré de sorte que :
- la lumière émerge du bras objet 70A en étant orientée selon un premier axe de sortie 704A ;
- la lumière émerge du bras de référence 70B en étant orientée selon un second axe de sortie 704B ; et
- le bras objet 70A et le bras de référence 70B sont quasiment symétriques l'un de l'autre relativement au plan P tel que mentionné ci-avant, avec toutefois une légère dissymétrie qui fait que le second axe de sortie 704B, et le symétrique 704A' du premier axe de sortie par la symétrie planaire relativement au plan P, sont inclinés l'un relativement à l'autre d'un angle dy, avec dy supérieur ou égal à 0,1° voire 0,5° et avec dy inférieur ou égal à 5° voire 1°.

Ici, la lumière extraite arrive à incidence normale sur la face de sortie du bras objet 70A, et arrive sur la face de sortie du bras de référence en étant inclinée d'un angle inférieur à 1° (en valeur absolue) relativement à la normale à ladite face de sortie du bras de référence.

Le décalage angulaire dy peut être obtenu avec :
- une valeur du pas de répartition des motifs dans le premier réseau de diffraction distincte de la valeur du pas de répartition des motifs dans le second réseau de diffraction ; et/ou
- un angle formé entre le plan (Oxy) et la première face de sortie 713A distinct d'un angle formé entre le plan (Oxy) et la seconde face de sortie 713B.

On obtient ainsi une figure d'interférence, avec un interfrange qui est une fonction de dy.

Un phénomène de moiré apparaît en cas de sous-échantillonnage d'une figure d'interférence, et se traduit par la détection de franges d'interférences, d'interfrange plus élevé que la valeur réelle d'interfrange. Les franges détectées présentent alors un interfrange de Moiré, supérieur aux dimensions du détecteur, empêchant alors toute mesure de l'interfrange. Ici, il est possible de sélectionner une valeur de dy, permettant in fine, grâce au phénomène de moiré, d'obtenir sur le détecteur matriciel des franges d'interférence dont l'interfrange est compatible avec les dimensions du détecteur. On peut ainsi observer des franges, même avec un détecteur matriciel dont l'échantillonnage spatial n'est pas assez fin pour résoudre les franges d'interférence théoriques.

Pour que la surface d'intersection des faisceaux qui interfèrent entre eux ne soit pas modifiée par la dissymétrie, on peut translater selon l'axe (Oy) le premier ou le second réseau de diffraction.

L'invention couvre également un composant optique qui ne diffère du mode de réalisation des figures 6A et 6B qu'en ce qu'il existe une légère dissymétrie entre les axes de sortie selon lesquels la lumière émerge du bras objet et les axes de sortie selon lesquels la lumière émerge du bras de référence.

Dans ces deux cas, l'invention couvre également des variantes avec un diviseur et des guides d'adaptation, comme illustré à la figure 4. Ces variantes sont particulièrement avantageuses, en ce qu'elles permettent d'injecter des faisceaux lumineux synchronisés et de même longueur d'onde, dans chacun parmi les premier et second guides d'onde planaires. Le cas échéant, on peut adapter un facteur de répartition du diviseur, pour compenser une éventuelle différence d'efficacité d'extraction entre les deux bras.

Dans tous les cas, selon l'invention :
- le bras objet est configuré pour qu'une partie au moins de la lumière extraite par le premier réseau de diffraction émerge du bras objet en étant orientée selon un premier axe de sortie ;
- le bras de référence est configuré pour qu'une partie au moins de la lumière extraite par le second réseau de diffraction émerge du bras de référence en étant orientée selon un second axe de sortie ; et
- le bras objet et le bras de référence sont sensiblement symétriques l'un de l'autre, selon une symétrie planaire par un plan de symétrie orthogonal au plan du composant optique, et avec une éventuelle asymétrie définie par un écart angulaire inférieur ou égal à 5° (voire inférieur ou égal à 1°) entre le second axe de sortie et le symétrique du premier axe de sortie par ladite symétrie planaire.

L'invention couvre également un système optique, non représenté, qui comporte :
- un composant optique selon l'invention, avec un diviseur et deux guides d'adaptation comme illustré à la figure 4 ; et
- une source cohérente, notamment une source laser (par exemple un laser à cascade quantique ou un laser à cascade interbande), apte à fournir un faisceau lumineux initial en entrée du diviseur.

L'injection de lumière dans le composant optique se fait par la tranche. La source cohérente est de préférence une source lumineuse infrarouge.

L'invention couvre également un système optique, non représenté, qui comporte :
- un composant optique selon l'invention ;
- un calculateur, relié au détecteur matriciel, configuré pour recevoir en entrée des mesures d'intensité lumineuse fournies par le détecteur, et pour fournir en sortie une image d'un échantillon à analyser formée par une carte de répartition de déphasages.

Le calculateur peut être configuré en outre pour calculer, à partir de la carte de répartition de déphasages, une carte de répartition de compositions chimiques ou biologiques locales dans l'échantillon, et pour fournir en sortie ladite carte de répartition de compositions chimiques ou biologiques locales.

Le composé optique selon l'invention peut être réalisé à partir d'un substrat initial en silicium. Des épitaxies successives sont réalisées sur ce substrat initial, pour former un empilement de couches bas indice et haut indice, avec des gravures partielles anisotropes pour former les réseaux de diffraction et pour délimiter les guides d'onde planaires (et le cas échéant le diviseur et les guides d'adaptation). Ensuite, le substrat initial est gravé pour former les substrats d'appui avec leurs faces de sortie. Le cas échéant, un autre substrat est déposé et gravé, pour former les substrats inférieurs d'un composant optique tel qu'illustré aux figures 6A et 6B. Ledit autre substrat présente deux faces transverses orientées en biais, formant les première et seconde faces de sortie, respectivement du bras objet et du bras de sortie. Ces faces transverses sont formées avant le report sur l'empilement, par exemple par gravure anisotrope ou par un procédé de moulage et emboutissage. Le composé optique obtenu est donc un composant intégré sur silicium.

L'invention n'est pas limitée aux exemples décrits, et couvre de nombreuses autres variantes, notamment avec des matériaux différents, des longueurs d'onde d'extraction différentes, etc. L'invention couvre toutes les combinaisons d'angle d'extraction et d'angle d'inclinaison des faces de sortie permettant d'obtenir le trajet souhaité de la lumière. Dans les exemples décrits, les motifs des réseaux de diffraction s'étendent le long de lignes droites parallèles entre elles. En variante, ces motifs peuvent s'étendre le long de lignes courbes convexes. Les courbes, ne sont pas forcément identiques sur tout le long du réseau de diffraction. Il peut être avantageux d'avoir des motifs qui n'ont pas la même courbure à l'avant ou à l'arrière du réseau. Selon d'autres variantes, les réseaux peuvent être des réseaux de diffraction à deux dimensions, permettant d'éclairer l'échantillon à analyser sous deux polarisations différentes. Selon d'autres variantes encore, les première et seconde faces de sortie ne sont pas planes, mais incurvées, par exemple pour faire diverger la lumière émergeant du composant optique. Dans ce cas, un angle d'inclinaison d'une face de sortie est défini en considérant un plan reliant deux arêtes délimitant ladite face de sortie. Selon d'autres variantes encore, le composant optique ne comporte pas de substrats d'appui. Ces derniers sont néanmoins avantageux, pour maîtriser au mieux la distance entre les réseaux de diffraction et l'échantillon à analyser, en accolant ce dernier contre l'un au moins des substrats d'appui.

L'invention permet de réaliser de l'imagerie interférométrique, par exemple dans l'infrarouge. Elle permet de réaliser des analyses chimiques ou biologiques d'un échantillon, et d'obtenir rapidement des images grand champ avec une instrumentation compacte. Elle trouve notamment à s'appliquer dans le domaine de la santé et de l'agro-alimentaire.

## Revendications

1. Composant optique (100 ; 400; 600; 700) pour un dispositif d'imagerie interférométrique, **caractérisé en ce qu'**il comprend :
- un bras objet (10A ; 60A ; 70A), comportant un premier guide d'onde planaire (120A; 620A) s'étendant parallèle à un plan nommé plan du composant optique, et au moins un premier réseau de diffraction (130A ; 730A) formé dans le premier guide d'onde planaire et apte à extraire de la lumière hors du premier guide d'onde planaire et hors du bras objet ;
- un bras de référence (10B ; 60A' ; 70B), comportant un second guide d'onde planaire (120B ; 620A') s'étendant parallèle au plan du composant optique, et au moins un second réseau de diffraction (130B ; 730B) formé dans le second guide d'onde planaire et apte à extraire de la lumière hors du second guide d'onde planaire et hors du bras de référence ;
et **en ce que** le composant optique (100 ; 400 ; 600 ; 700) est configuré pour que, en utilisation avec une surface (21) optiquement réfléchissante s'étendant parallèle au plan du composant optique entre le bras objet et le bras de référence, une partie au moins de la lumière (202A; 606A ; 607A) extraite hors du bras objet interfère avec une partie au moins de la lumière (202B ; 607A' ; 606A') extraite hors du bras de référence.

2. Composant optique (100 ; 400 ; 600 ; 700) selon la revendication 1, dans lequel :
- le bras objet (10A ; 60A ; 70A) est configuré pour qu'une partie au moins de la lumière extraite par le premier réseau de diffraction (130A ; 730A) émerge du bras objet en étant orientée selon un premier axe de sortie (204A ; 704A) ;
- le bras de référence (10B ; 60A' ; 70B) est configuré pour qu'une partie au moins de la lumière extraite par le second réseau de diffraction (130B ; 730B) émerge du bras de référence en étant orientée selon un second axe de sortie (704B) ;
où le second axe de sortie est incliné d'un angle inférieur ou égal à 5°, relativement au symétrique du premier axe de sortie selon une symétrie planaire par un plan de symétrie (P) orthogonal au plan du composant optique.

3. Composant optique (100 ; 400 ; 600 ; 700) selon la revendication 1 ou 2, dans lequel :
- le bras objet (10A ; 60A ; 70A) comporte en outre un premier substrat d'appui (110A ; 610A), superposé au premier guide d'onde planaire (120A ; 620A) le long d'un axe orthogonal au plan du composant optique ; et
- le bras de référence (10B ; 60A' ; 70B) comporte en outre un second substrat d'appui (110B ; 610A'), superposé au second guide d'onde planaire (120B ; 620A') le long d'un axe orthogonal au plan du composant optique ;
et :
- le bras objet (10A ; 60A ; 70A) est configuré pour qu'une partie au moins de la lumière extraite par le premier réseau de diffraction (130A ; 730A) émerge du bras objet au niveau d'une première face de sortie (113A ; 613A ; 713A), appartenant au premier substrat d'appui et orientée transverse relativement au plan du composant optique ; et
- le bras de référence (10B ; 60A' ; 70B) est configuré pour qu'une partie au moins de la lumière extraite par le second réseau de diffraction (130B ; 730B) émerge du bras de référence au niveau d'une seconde face de sortie (113B ; 613A' ; 713B), appartenant au second substrat d'appui et orientée transverse relativement au plan du composant optique.

4. Composant optique (100 ; 400 ; 600 ; 700) selon la revendication 3, dans lequel :
- dans le bras objet (10A ; 60A ; 70A), le premier réseau de diffraction (130A; 730A) présente une première valeur du pas de répartition des motifs (PA), adaptée pour extraire un faisceau lumineux à une longueur d'onde d'extraction, et selon une première direction d'extraction telle que la lumière pénètre dans le premier substrat d'appui (110A ; 610A) puis émerge de ce dernier au niveau de la première face de sortie (113A ; 613A ; 713A) ;
- dans le bras de référence (10B ; 60A' ; 70B), le second réseau de diffraction (130B ; 730B) présente une seconde valeur du pas de répartition des motifs (PB), adaptée pour extraire un faisceau lumineux à ladite longueur d'onde d'extraction, et selon une seconde direction d'extraction telle que la lumière pénètre dans le second substrat d'appui (110B ; 610A') puis émerge de ce dernier au niveau de la seconde face de sortie (113B ; 613A' ; 713B).

5. Composant optique (100 ; 400 ; 600) selon la revendication 4, dans lequel :
- dans le bras objet (10A ; 60A), la première direction d'extraction est adaptée pour qu'un faisceau lumineux associé arrive à incidence normale sur la première face de sortie (113A ; 613A) ; et
- dans le bras de référence (10B ; 60A'), la seconde direction d'extraction est adaptée pour qu'un faisceau lumineux associé arrive à incidence normale sur la seconde face de sortie (113B ; 613A').

6. Composant optique (100; 400; 600; 700) selon l'une quelconque des revendications 3 à 5, dans lequel chacun parmi le premier réseau de diffraction (130A; 730A) et le second réseau de diffraction (130B ; 730B) :
- est constitué de motifs qui comportent chacun une portion bas indice, en un matériau bas indice, et une portion haut indice, en un matériau haut indice, avec l'indice de réfraction du matériau haut indice strictement supérieur à l'indice de réfraction du matériau bas indice ; et
- présente une valeur locale du facteur de remplissage qui varie de façon monotone au fur et à mesure que l'on s'approche de la première (113A; 613A ; 713A), respectivement seconde face de sortie (113B ; 613A' ; 713B), la valeur locale du facteur de remplissage se rapprochant ainsi progressivement de la valeur 0,5, et avec le facteur de remplissage qui désigne un rapport entre une surface occupée par la portion bas indice dans un motif dudit réseau de diffraction et une surface totale occupée par ledit motif, lesdites surfaces étant définies dans un plan de coupe parallèle au plan du composant optique.

7. Composant optique (400) selon l'une quelconque des revendications 1 à 6, comportant en outre un diviseur (441) à une entrée et deux sorties (41A, 41B), configuré pour recevoir en entrée un faisceau lumineux initial et pour répartir celui-ci vers le bras objet (10A) et le bras de référence (10B), et le composant optique comportant en outre :
- un premier guide d'adaptation (442A), s'étendant entre l'une première sortie (41A) du diviseur (441) et le premier guide d'onde planaire du bras objet (10A), et présentant une largeur croissante depuis une extrémité accolée à la première sortie du diviseur jusqu'à une extrémité accolée au premier guide d'onde planaire ; et
- un second guide d'adaptation (442B), s'étendant entre l'une seconde sortie (41B) du diviseur (441) et le second guide d'onde planaire du bras de référence (10B), et présentant une largeur croissante depuis une extrémité accolée à la seconde sortie du diviseur jusqu'à une extrémité accolée au second guide d'onde planaire.

8. Composant optique (400) selon la revendication 7, dans lequel le premier guide d'adaptation (442A) et le second guide d'adaptation (442B) sont chacun recourbés, de manière à ce qu'un axe de propagation de la lumière en entrée du premier guide d'onde planaire et un axe de propagation de la lumière en entrée du second guide d'onde planaire soient parallèles entre eux et de sens opposés.

9. Composant optique (100; 400; 600; 700) selon l'une quelconque des revendications 1 à 8, présentant une symétrie planaire, relativement à un plan de symétrie orthogonal au plan du composant optique et passant entre le bras objet (10A ; 60A) et le bras de référence (10B ; 60A').

10. Composant optique (700) selon l'une quelconque des revendications 1 à 8, dans lequel :
- le bras objet (70A) est configuré pour qu'une partie au moins de la lumière extraite par le premier réseau de diffraction (730A) émerge du bras objet en étant orientée selon un premier axe de sortie (704A) ;
- le bras de référence (70B) est configuré pour qu'une partie au moins de la lumière extraite par le second réseau de diffraction (730B) émerge du bras de référence en étant orientée selon un second axe de sortie (704B) ; et
- le bras objet et le bras de référence sont quasiment symétriques l'un de l'autre, selon une symétrie planaire par un plan de symétrie orthogonal au plan du composant optique, et avec une asymétrie définie par un écart angulaire (dy) compris entre 0,5° et 5° entre le second axe de sortie (704B) et le symétrique (704A') du premier axe de sortie par ladite symétrie planaire.

11. Composant optique (600) selon l'une quelconque des revendications 3 à 10, dans lequel :
- le bras objet (60A) comporte en outre un premier substrat inférieur (660A), avec le premier guide d'onde planaire (620A) intercalé entre le premier substrat d'appui (610A) et le premier substrat inférieur (660A) ;
- le bras de référence (60A') comporte en outre un second substrat inférieur (660A'), avec le second guide d'onde planaire (620A') intercalé entre le second substrat d'appui (610A') et le second substrat inférieur (660A') ;
où le bras objet (60A) est configuré pour que la lumière extraite par le premier réseau de diffraction émerge du bras objet par le premier substrat d'appui (610A) et par le premier substrat inférieur (660A) ; et
où le bras de référence (60A') est configuré pour que la lumière extraite par le second réseau de diffraction émerge du bras de référence par le second substrat d'appui (610A') et par le second substrat inférieur (660A').

12. Système optique (5000) **caractérisé en ce qu'**il comporte un composant optique selon l'une quelconque des revendications 1 à 11, et un détecteur matriciel (550) situé entre le bras objet (10A) et le bras de référence (10B) et configuré pour acquérir une figure d'interférence formée par une partie au moins de la lumière extraite hors du bras objet et une partie au moins de la lumière extraite hors du bras de référence.

13. Système optique selon la revendication 12, dans lequel le détecteur matriciel s'étend dans une région d'intersection (203) entre un faisceau lumineux (202A) extrait hors du bras objet et réfléchi sur une première zone (Z1) de la surface optiquement réfléchissante (21), et un faisceau lumineux extrait hors du bras de référence (202B) et réfléchi sur une seconde zone (Z2) de la surface optiquement réfléchissante (21).

14. Système optique selon la revendication 12, dans lequel :
- le bras objet est configuré pour extraire de la lumière selon deux directions distinctes ;
- le bras de référence est configuré pour extraire de la lumière selon deux directions distinctes ; et
- le détecteur matriciel s'étend dans une première région d'intersection (6031) et dans une seconde région d'intersection (6032) ;
où la première région d'intersection (6031) est une région dans laquelle un faisceau lumineux (606A) extrait hors du bras objet et réfléchi sur une première zone (Z1) de la surface optiquement réfléchissante (21), interfère avec un faisceau lumineux (607A') extrait hors du bras de référence et arrivant directement sur ladite première région d'intersection ; et
où la seconde région d'intersection (6032) est une région dans laquelle un faisceau lumineux (606A') extrait hors du bras de référence et réfléchi sur une seconde zone (Z2) de la surface optiquement réfléchissante (21), interfère avec un faisceau lumineux (607A) extrait hors du bras objet et arrivant directement sur ladite seconde région d'intersection.
